# EUROPEAN PATENT APPLICATION

(11) **EP 3 521 644 A1**
(43) Date of publication of application: **07.08.2019**
(21) Application number: 18154390.1
(22) Date of filing: 31.01.2018
(51) Int. Cl.: F16C 3/06, F16C 3/08, F16C 33/14

(54) **CRANKSHAFT WITH CONCAVELY CURVED CRANK PINS**

(71) Applicant: ThyssenKrupp Metalúrgica Campo Limpo Ltda., 13231-900 Campo Limpo Paulista-SP (BR); thyssenkrupp AG, 45143 Essen (DE)
(72) Inventor: Santos Silva, Luis Felipe, 02022-021 Santana (SP) (BR); Atoatte, Almir, 13202265 Jundiai (SP) (BR)
(74) Representative: Patentanwälte Walther Hinz Bayer PartGmbB

(57) **Abstract**

The present invention relates to a crankshaft (1) with at least one crank pin (10) for mounting the big end of a conrod to the crankshaft (1) and with at least one crank web (11), whereas the bearing surface (12) of the crank pin (10) features a concavely curved profile along a center axis (13) of the crank pin (10), and whereas at least one axial end of the crank pin (10) transits into the crank web (11) in a transition area (14). According to the invention, the transition area (14) comprises no planar side wall (15) and is thus performed without a planar side wall (15).

## Description

The present invention relates to a crankshaft with at least one crank pin for mounting the big end of a conrod to the crank shaft and with at least one crank web, whereas the bearing surface of the crank pin features a concavely curved profile along a center axis of the crank pin, and whereas at least one axial end of the crank pin transits into the crank web in a transition area.

### PRIOR ART

EP 2 134 977 B1 discloses a crankshaft with at least one crank pin for mounting the big end of a conrod to the crank shaft and with at least one crank web, whereas the bearing surface of the crank pin features a concavely curved profile along a center axis of the crank pin and whereas at least one axial end of the crank pin transits into the crank web in a transition area.

The bearing surface of the crank pin is turned after forging or casting the crankshaft by means of a turning process, and after a thermal treatment the crankshaft is ground to finish the bearing surface getting into contact with the big end of the connecting rod.

A crankshaft design according to the prior art features so called side walls, which are turned or ground by means of a necessary turning or grounding process, and the side walls form planar wall sections on the crank web bordering the axial extension of the crank pin. In particular the center axis of the crank pin forms a surface-normal running perpendicular through the planar surface which is defined with the side wall. Side walls are necessary to form a limitation of an axial movement of the conrod which is arranged on the crank pin when the crankshaft is running in a crank drive.

Usually it is an objective of the design of crankshafts to reduce the time and effort in the necessary manufacturing processes. According to another aspect, the crankshaft is mechanically high stressed and it is necessary to form a special design of the transition area in order to guarantee a high loading capacity of the crankshaft, in particular for turbo charged small internal combustion machines.

### DISCLOSURE OF INVENTION

It is an objective of the present invention to overcome the disadvantages of the prior art and to design a crankshaft, which requires less time and effort for the manufacturing but which is able to provide the necessary high load capacity.

This objective is achieved by a crankshaft according to claim 1 of the present invention. Preferred embodiments of the invention are defined by the sub claims.

The invention discloses that the transition area is performed without a planar side wall.

The core idea of the invention is to eliminate the radial height of the planar side wall within the transition area between the crank web and the crank pin. Crank pins with a concavely curved profile lead to the advantage that a conrod which is mounted on such a crank pin is auto-guided or auto centered in between the lateral arranged crank webs and due to the auto-guiding effect of the conrods on such crank pins the side walls are not necessary any more. When the radial height of the planar side wall is eliminated, the effort of a necessary machining process, in particular a grinding process, can be reduced, which leads to a reduced time consumption when manufacturing a crankshaft. According to yet another advantage, the wear of a perishable grinding equipment is reduced and with only one grinding equipment a higher number of crankshafts can be ground.

According to the invention, the transition is performed without a planar side wall, and in other words, the height of the side wall amounts zero. A most preferred embodiment is a transition of the crank pin into the crank web without a side wall which is machined in any kind of a machining process, in particular grinding and/or turning.

According to yet another embodiment, the bearing surface of the crank pin features a curved, ground surface, and in the transition area a curved ground bearing surface directly transits into a web surface of the crank web with a forged or cast surface. As an alternative, the bearing surface of the crank pin features a curved, ground surface and in the transition area a turned surface is arranged in between the curved ground bearing surface and the web surface of the crank web with features a forged or cast surface.

Usually, after the forging or casting process the main bearings and the bearings forming the crank pins are turned with a turning process, and after a thermal treatment of the crankshaft, the surface of the main bearing and in particular the bearing surface of the crank pins are ground in a grinding process. According to the inventive design of the transition area, the ground surface can directly transit into the web surface or it is rather possible that a section with a turned surface is arranged in between the ground surface and the untreated web surface. The ground surface features an extension towards the crank web, which is sufficient to form the contact surface to the conrod among the entire width. In other words, the turned surface does not contact the conrod in any case.

According to yet another embodiment, the concavely curved profile along a center axis of the crank pin features a curvature that is sufficient to hold the conrod spaced apart to the transition area and/or to the crank web.

According to another aspect of the invention, the transition area is formed without a recess. Usually, recesses are known to minimize notching effects in the transition between the crank pin and the crank web, and a transition area without a recess reduces the time and effort of manufacturing the crankshaft again.

Furthermore, the ground surface between two crank webs of the crankshaft can be limited to the bearing surface of the crank pin and/or it is limited to the bearing surface and ground radius section. The radius section can be ground with the same grinding tool as it is used to grind the crank pin. Accordingly, the tool effort is reduced and the entire grinding process can be performed with only one grinding tool.

### PREFERRED EMBODIMENT OF THE INVENTION

Additional details, characteristics and advantages of the object of the invention are disclosed in the sub claims and the following description of the respective figures, which show preferred embodiments in an exemplary fashion of the subject matter according to the invention in conjunction with the accompanying figures, in which
- Fig. 1: shows a crankshaft according to the prior art,
- Fig. 2: shows a perspective view of a crank pin with no planar side wall in the transition area and
- Fig. 3: shows a detailed view of a transition area with no planar side wall between the bearing surface of the crank pin and the crank web.

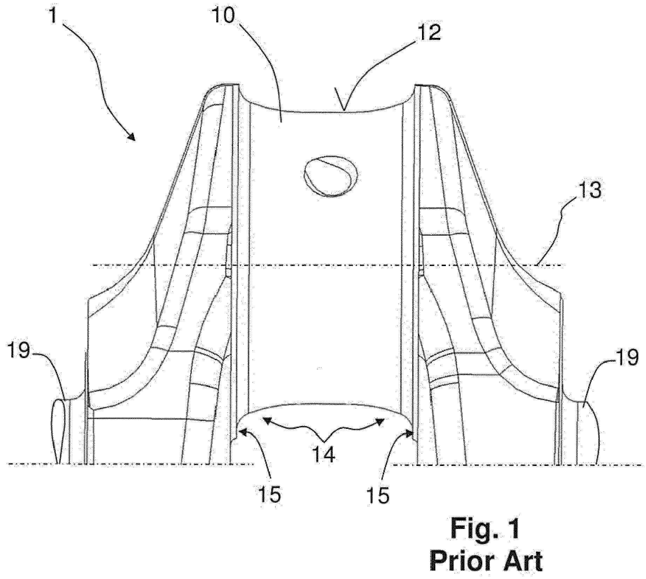

In Fig. 1 is depicted a side-view of a crankshaft 1, which is represented by a detailed view of the crank pin 10, which is arranged in between two main bearings 19. In lateral position of the bearing surface 12 of the crank pin 10 with respect to its center axis 13 crank webs 11 are arranged, which crank webs 11 form the counter weights (not shown in the lower section of the crankshaft 1) and furthermore the crank webs 11 form a transition between the main bearings 19 and the crank pins 10.

The crank pin 10 is thought for receiving the big end of a conrod to form a crank drive with the crankshaft 1, and the crank pin 10 features a bearing surface 12, which comprises a concavely curved profile along the center axis 13 of the crank pin 10. In the lateral directions of the crank pin 10 transition areas 14 are defined in which the crank pin 10 transits into the crank webs 11.

Each of the transition areas 14 comprises a planar side wall 15, which side wall 15 defines a plane and the center axis 13 is directed perpendicular to the plane. This side wall 15 is machined by grinding, and the side walls 15 define a lateral boundary for the conrod which is arranged on the crank pin 10.

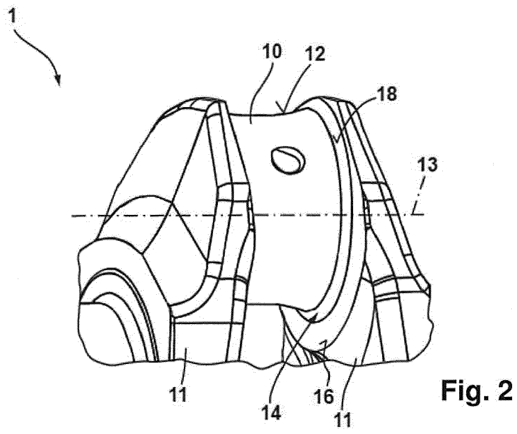

Fig. 2 shows an embodiment of the crankshaft 1 with the crank pin 10 featuring the bearing feature 12, and the crank pin 10 is received in between two crank webs 11 having a web surface 16. The crank pin 10 extends along the center axis 13.

In this embodiment the transition area 14 is performed without a planar side wall. This leads to the advantage that no planar side wall must be manufactured. The ground bearing surface 12 directly transits into the rough web surface 16, whereas a radius section 18 with a ground surface can be arranged adjacent to the bearing surface 12 which is in contact with the conrod.

This leads to the fact that according to this embodiment of the invention, the invention is directed to a crankshaft 1 with at least one crank pin 10 for mounting the big end of the conrod to the crank pin 10 and with at least one crank web 11, whereas the bearing surface 12 of the crank pin 10 features a concavely curved profile along a center axis 13 of the crank pin 10, and whereas at least one axial end of the crank pin 10 transits into the crank web 11 in a transition area 14. According to this embodiment, the transition area 14 is performed without a planar side wall 15.

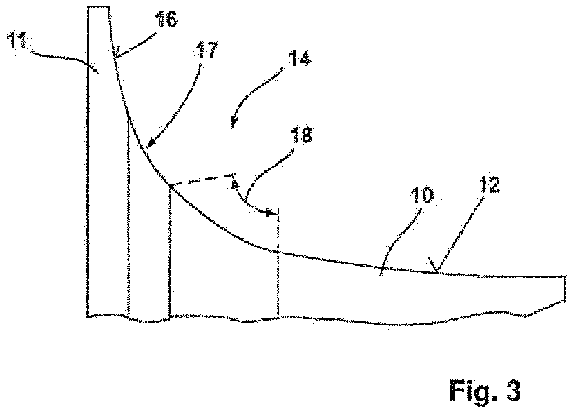

Fig. 3 shows a detailed view of the transition area 14 between the crank pin 10 and the crank web 11, and the ground surface 12 of the crank pin 10 transits into a radius section 18 with another ground surface, and next to the radius section 18 a turned surface 17 forms a final, outer section of the transition area 14. Next to the turned surface 17 this surface transits into the web surface 16 of the crank web 11, forming a forged or cast surface.

The aforementioned components as well as the claimed components and the components to be used in accordance with the invention in the described embodiment are not subject to any special exceptions with respect to their size, shape, material selection and technical concept such that the selection criteria known in the pertinent field can be applied without limitations.

### List of numerals

- 1: crankshaft

- 10: crank pin
- 11: crank web
- 12: bearing surface
- 13: center axis
- 14: transition area
- 15: side wall
- 16: web surface
- 17: turned surface
- 18: radius section
- 19: main bearing

## Claims

1. A crankshaft (1) with at least one crank pin (10) for mounting the big end of a conrod to the crankshaft (1) and with at least one crank web (11), whereas the bearing surface (12) of the crank pin (10) features a concavely curved profile along a center axis (13) of the crank pin (10), and whereas at least one axial end of the crank pin (10) transits into the crank web (11) in a transition area (14),
**characterized in that** the transition area (14) is performed without a planar side wall (15).

2. A crankshaft (1) according to claim 1,
**characterized in that** the bearing surface (12) of the crank pin (10) features a curved, ground surface, and in the transition area (14) the curved ground bearing surface (12) directly transits into a web surface (16) of the crank web (11) with a forged or cast surface.

3. A crankshaft (1) according to claim 1 or 2,
**characterized in that** the bearing surface (12) of the crank pin (10) features a curved, ground surface, and in the transition area (14) a turned surface (17) is arranged in between the curved ground bearing surface (12) and the web surface (16) of the crank web (11) with a forged or cast surface.

4. A crankshaft (1) according to one of the claims 1 to 3,
**characterized in that** the concavely curved profile along a center axis (13) of the crank pin (10) features a curvature that is sufficient as to hold the conrod spaced apart to the transition area (14) and/or to the crank web (11).

5. A crankshaft (1) according to one of the previous claims,
**characterized in that** the transition area (14) is formed without a recess.

6. A crankshaft (1) according to one of the previous claims,
**characterized in that** the ground surface between two crank webs (11) of the crankshaft (1) is limited to the bearing surface (12) of the crank pin (10) and/or is limited to the bearing surface (12) and a ground radius section (18).
